# FASCICULE DE BREVET EUROPEEN

(11) **EP 1 304 157 B1**
(45) Date de publication et mention de la délivrance du brevet: **10.02.2010**
(21) Numéro de dépôt: 02356205.1
(22) Date de dépôt: 18.10.2002
(51) Int. Cl.: B01D 65/06, B01D 65/02, B01D 61/14, A23L 2/74, C12H 1/06, C12G 3/08

(54) **Procédé de nettoyage d'une membrane céramique utilisée dans le filtration du vin**
Verfahren zur Reinigung einer keramischen Membran für die Anwendung in der Weinfiltration
Method for cleaning a ceramic membrane used in the filtration of wine

(30) Priorité: 19.10.2001 FR 0113493
(43) Date de publication de la demande: 23.04.2003
(73) Titulaire: Technologies Avancées & Membranes Industrielles, 26110 Nyons (FR)
(72) Inventeur: Grangeon, André, 84600 Valreas (FR); Lescoche, Philippe, 84110 Faucon (FR)
(74) Mandataire: Thibault, Jean-Marc

(56) Documents cités:
- EP-A- 0 467 735
- PATENT ABSTRACTS OF JAPAN vol. 1997, no. 03, 31 mars 1997 (1997-03-31) & JP 08 309165 A (TOSHIBA CERAMICS CO LTD), 26 novembre 1996 (1996-11-26)
- PATENT ABSTRACTS OF JAPAN vol. 0165, no. 18 (C-0999), 26 octobre 1992 (1992-10-26) & JP 04 193333 A (KURITA WATER IND LTD), 13 juillet 1992 (1992-07-13)
- DATABASE WPI Week 199530 Derwent Publications Ltd., London, GB; AN 1995-227563 XP002200478 & JP 07 136475 A (NITTO DENKO CORP), 30 mai 1995 (1995-05-30)
- PATENT ABSTRACTS OF JAPAN vol. 0175, no. 77 (C-1122), 20 octobre 1993 (1993-10-20) & JP 05 168873 A (ASAHI CHEM IND CO LTD), 2 juillet 1993 (1993-07-02)
- PATENT ABSTRACTS OF JAPAN vol. 1995, no. 04, 31 mai 1995 (1995-05-31) & JP 07 016566 A (JAPAN ORGANO CO LTS), 20 janvier 1995 (1995-01-20)
- DATABASE WPI Week 199315 Derwent Publications Ltd., London, GB; AN 1993-120516 XP002200479 & JP 05 057161 A (TOSHIBA KK), 9 mars 1993 (1993-03-09)
- PATENT ABSTRACTS OF JAPAN vol. 1998, no. 13, 30 novembre 1998 (1998-11-30) & JP 10 216487 A (KURITA WATER IND LTD), 18 août 1998 (1998-08-18)

## Description

La présente invention concerne le domaine des techniques séparatives à membranes. L'objet de l'invention vise, plus précisément, un procédé de nettoyage d'une membrane inorganique colmatée par des éléments retenus lors d'une utilisation antérieure de la membrane pour la filtration d'un vin.

Les techniques de séparation utilisant des membranes sont utilisées dans de nombreux secteurs, notamment dans l'environnement pour la production d'eau potable, le traitement des effluents industriels, dans l'industrie chimique, pétrochimique, pharmaceutique, agro-alimentaire, en oenologie et dans le domaine de la biotechnologie.

Les techniques de séparation moléculaire ou particulaire utilisées en génie chimique permettent de concentrer, trier, extraire des espèces moléculaires ou particulaires, sous l'effet d'une force de transfert qui est une pression et mettent en oeuvre des éléments de séparation appelés généralement membranes.

La terminologie utilisée pour désigner ces techniques de séparation à membrane dépend du milieu et de la taille des espèces moléculaires ou particulaires à séparer. Lorsque l'un des constituants du milieu à traiter est diffusé dans la membrane, on parle d'osmose inverse. Lorsque l'un des composants est arrêté par la membrane du fait de sa taille par rapport à la taille des pores de la membrane, ces techniques sont nommées microfiltration, ultrafiltration ou nanofiltration, en fonction de la taille des pores.

Il existe des membranes de structure et texture différentes. Certaines sont composées de matériaux organiques, de type polymères de synthèse et sont nommées membranes organiques, d'autres sont composées de matériaux inorganiques et sont nommées membranes inorganiques ou céramiques.

Les membranes inorganiques ou céramiques sont en général constituées d'un support poreux inorganique, sur la surface duquel est déposée au moins une couche séparatrice inorganique dont la nature et la morphologie sont adaptées pour assurer la séparation des molécules ou des particules contenues dans le milieu fluide à traiter. Ces couches sont liées, entre elles et au support, par frittage. Le rôle des couches est d'assurer la séparation des espèces moléculaires ou particulaires, tandis que le rôle du support est de permettre, par sa résistance mécanique, la réalisation de couches de faible épaisseur.

Pour fonctionner, les installations de séparation à membrane comprennent une entrée, une membrane et une sortie. A l'entrée se trouve une chambre d'entrée qui est alimentée par le milieu fluide à traiter et dans lequel s'exerce la pression. Le fluide présent dans cette chambre d'entrée est appelé "rétentat" : il contient le fluide à traiter, ainsi que les espèces arrêtées par la membrane. En sortie se trouve une chambre de sortie, séparée de la précédente par la membrane, dans laquelle s'écoule le fluide appelé "perméat" ayant traversé la membrane.

Quand le milieu est liquide, les espèces moléculaires ou particulaires arrêtées par la membrane s'accumulent continuellement sur la paroi de cette dernière, provoquant ainsi un phénomène appelé "colmatage" qui se comporte alors comme une résistance supplémentaire et limite le transfert à travers la membrane. Quand le transfert devient trop faible du fait du colmatage, la membrane doit être, soit régénérée à partir de réactifs chimiques de nettoyage pour tenter de retrouver son état initial, soit jetée. Aucune méthode ne supprime totalement le colmatage, mais plusieurs moyens technologiques peuvent le réduire permettant ainsi d'augmenter considérablement les temps de fonctionnement. Le moyen le plus utilisé est la circulation tangentielle.

Il est important de préciser en quoi consiste la circulation tangentielle. Les membranes sont, le plus souvent, réalisées à partir d'éléments de filtration à caractère tubulaire ou plan. Dans le domaine des membranes tubulaires, le support poreux rigide est de forme allongée et présente une section transversale droite polygonale ou circulaire. Le support poreux est aménagé pour comporter au moins un, et de préférence une série, de canaux parallèles entre eux et à l'axe longitudinal du support poreux, en présentant chacun une forme cylindrique. Dans le domaine technique des membranes à caractère plan, le support poreux se présente sous la forme d'un bloc dans lequel est aménagé au moins un, et en général une série, de canaux superposés présentant chacun une section droite transversale polygonale généralement rectangulaire. Dans les deux cas, la surface des canaux est recouverte d'au moins une couche séparatrice. Suivant le principe de la filtration tangentielle, le rétentat circule à grande vitesse sur la surface des canaux, entraînant ainsi l'existence d'une contrainte de cisaillement qui favorise la redispersion dans le rétentat des espèces déposées sur cette surface. Ainsi, dans le cas de la circulation tangentielle, l'installation à membrane se complique de manière importante et comprend:
- un compartiment rétentat correspondant aux canaux de circulation et communiquant, d'un côté, avec une chambre d'entrée pour le milieu fluide à traiter et, de l'autre côté, avec une chambre de sortie, ces chambres étant reliées respectivement au refoulement et à l'aspiration d'une pompe chargée de réaliser la circulation tangentielle du fluide,
- une couche séparatrice recouvrant la surface des canaux et assurant la séparation des molécules ou des particules contenues dans le milieu fluide circulant à l'intérieur des canaux, selon un sens donné, d'une extrémité à l'autre des canaux,
- et un compartiment perméat notamment séparé du compartiment rétentat par la surface membranaire, ce compartiment étant muni d'une sortie pour le perméat.

C'est selon ce principe que sont réalisées la plupart des installations à membrane.

L'intérêt principal du décolmatage tangentiel est de permettre des temps de fonctionnement entre deux régénérations chimiques compatibles avec les exigences industrielles. Il permet donc aux membranes de devenir un outil supplémentaire du génie chimique. Cependant, le décolmatage tangentiel ne supprime pas totalement le colmatage et il est toujours nécessaire de régénérer chimiquement la membrane quand cette dernière est trop colmatée.

La régénération chimique ou nettoyage comprend l'action de réactifs chimiques qui permettent de décomposer les matières colmatantes. Deux types de réactifs sont classiquement utilisés : des réactifs permettant de décomposer les matières organiques et des réactifs permettant de décomposer les matières minérales. Régénérer une membrane consiste à utiliser un ou deux types de ces réactifs, afin de tenter de retrouver la perméabilité initiale de la membrane à l'eau. L'opérateur choisit le(s) réactif(s) en fonction des matières colmatantes.

Classiquement, le nettoyage s'effectue à l'aide de réactifs minéraux, en forçant ces derniers à traverser la couche séparatrice de la surface membranaire. En effet, il est généralement admis que la couche de séparation est colmatée sur toute son épaisseur et qu'il convient donc de faire circuler les réactifs chimiques à l'intérieur des pores de cette couche séparatrice pour tenter de décomposer les éléments colmatants puis d'éliminer les produits de décomposition en les entraînant dans le compartiment perméat.

Un tel procédé de nettoyage est connu par le document JP-A-08 309 165.

Les opérations de régénération chimique sont toujours lourdes et source de pertes de temps de production, de consommation de réactifs chimiques et de production d'effluents. A titre d'exemple, la régénération chimique d'une installation industrielle comprend les étapes suivantes :
- vidange du produit à traiter présent à l'intérieur de l'installation ;
- remplissage d'eau et rinçage pour éliminer le reste du produit à traiter ;
- vidange de l'eau de rinçage ;
- remplissage avec le premier réactif ;
- chauffage à la température et nettoyage ;
- vidange du premier réactif ;
- remplissage avec de l'eau et rinçage du premier réactif, le critère de l'efficacité du rinçage étant d'obtenir la neutralité, cette opération pouvant parfois être doublée, triplée avant d'arriver à la neutralité de l'eau de rinçage ;
- remplissage avec le deuxième réactif ;
- chauffage à la température et nettoyage ;
- vidange du deuxième réactif ;
- remplissage avec de l'eau et rinçage du deuxième réactif, cette opération pouvant parfois être doublée ou triplée avant d'arriver à la neutralité de l'eau de rinçage ; reprise de la production.

Une telle opération dure environ deux heures, ce qui peut représenter 25 % du temps de production.

Pour les membranes inorganiques ou céramiques utilisées dans la filtration de vin, cette méthode de nettoyage est encore plus pénalisante, en raison de la grande difficulté à éliminer les constituants du vin.

La filtration des vins sur membrane céramique est une opération de microfiltration qui consiste à retenir les éléments qui participent à la turbidité (sels tartriques, agglomérats de macromolécules, poussières, bactéries, germes), dans le but d'obtenir un vin très limpide et exempt de bactéries ou de germes. Les constituants du vin, essentiellement responsables du colmatage des membranes céramiques, sont les polysaccharides et les polyphénols. Or, les polysaccharides sont certes dégradables en milieu oxydant du type acide nitrique mais les polyphénols, quant à eux, ne sont dégradés que par des réactifs organiques, tels que les solvants.

Il est évident que les solvants ne peuvent pas raisonnablement être utilisés comme réactifs nettoyants dans le domaine de l'oenologie.

Des membranes de pouvoir de coupure de l'ordre de 0,2 µm, fonctionnant selon le principe de la filtration tangentielle, sont utilisées dans la filtration des vins. L'expérience montre qu'après une filtration, il est difficile de régénérer chimiquement la membrane, ce qui a pour conséquence de réduire à chaque cycle de filtration la valeur de la perméabilité à l'eau. Quand cette valeur atteint une valeur critique déterminée expérimentalement à environ 50 % de la valeur initiale, le débit de production est également réduit. La difficulté de régénération chimique des membranes céramiques limite l'efficacité de l'installation en réduisant à la fois les temps de production et le volume traité par cycles de production. Le nettoyage chimique est donc une opération actuellement peu efficace pour l'utilisation des membranes céramiques dans l'industrie oenologique. Ainsi, l'utilisation des membranes inorganiques dans la filtration du vin n'est pas rentable.

Il existe donc actuellement un besoin pour de nouveaux procédés de nettoyage des membranes inorganiques utilisées dans la filtration du vin, ces procédés se devant notamment d'être économiques et d'augmenter la durée de vie des membranes utilisées et de ce fait leur rentabilité.

Un des objectifs de la présente invention est justement de fournir un nouveau procédé de nettoyage d'une membrane inorganique colmatée par des éléments retenus lors d'une utilisation antérieure de la membrane pour la filtration tangentielle d'un vin, ladite membrane comportant un support poreux inorganique qui délimite au moins un canal de circulation pour le vin à traiter dont la surface du canal est recouverte par au moins une couche inorganique de séparation pour le vin à traiter, de manière qu'après avoir traversé la couche inorganique de séparation, le vin traité puisse être récupéré sur une sortie. Ledit procédé met en oeuvre une étape de régénération chimique, réalisée en faisant circuler un milieu fluide contenant au moins un réactif chimique capable de dégrader chimiquement et au moins partiellement les éléments responsables du colmatage. Dans le procédé selon l'invention, la circulation du milieu fluide contenant au moins un réactif chimique est assurée dans le canal de circulation, sans que ledit fluide ne traverse la couche inorganique de séparation.

En effet, il a été démontré que l'utilisation des membranes dans la filtration du vin entraîne un colmatage de ces dernières, dû essentiellement à une accumulation des éléments filtrés en surface de la couche séparatrice et non à l'intérieur des pores de la couche séparatrice. Aussi, le procédé de nettoyage selon l'invention dans lequel on fait circuler le fluide contenant le réactif chimique de nettoyage à l'intérieur des canaux de circulation, et donc en surface de la couche de séparation, en s'assurant que ce fluide ne traverse pas ladite couche de séparation, permet un décolmatage plus efficace. On évite ainsi un colmatage en profondeur observé lorsque le fluide de nettoyage traverse la couche séparatrice. En effet, dans les techniques antérieures, le fluide de nettoyage entraîne avec lui des débris de décomposition des éléments colmatants, voire même les éléments colmatants n'ayant pu être dégradés, ces derniers venant ainsi obstruer les pores de la couche séparatrice.

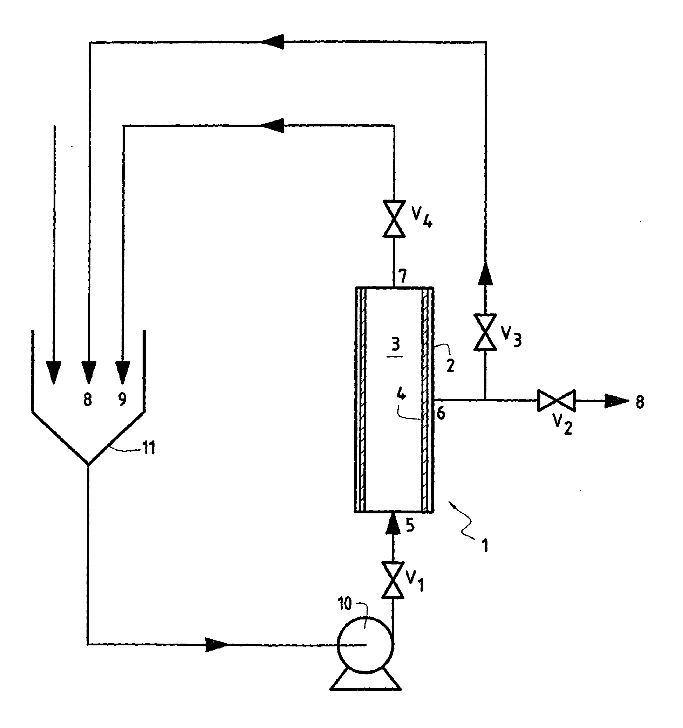

Diverses autres caractéristiques ressortent de la description faite ci-dessous en référence au dessin annexé qui montre, à titre d'exemple non limitatif, une forme de mise en oeuvre du procédé selon l'invention.

La **figure unique** représente une vue schématique d'une installation de traitement du vin par filtration tangentielle au travers d'une membrane de séparation.

La membrane **1** comporte un support poreux **2** qui délimite au moins un canal de circulation **3** pour le vin à traiter dont la surface est recouverte par au moins une couche de séparation **4**. Le vin à traiter pénètre dans la membrane à l'entrée **5** de la membrane, située à l'une des extrémités du canal de circulation **3**, ladite entrée **5** étant reliée au refoulement d'une pompe **10** chargée d'assurer la circulation du vin. La membrane comporte deux sorties :
- une première sortie **6** pour le perméat **8** ayant traversé la couche séparative et correspondant au vin traité,
- et une seconde sortie **7** pour le rétentat **9**, située à l'autre extrémité du canal de circulation **3**.

Il peut être prévu qu'après la première sortie **7**, le rétentat soit acheminé vers une cuve **11** pour être mélangé au vin à traiter, avant d'être à nouveau entraîner par la pompe **10** vers la membrane de séparation **1**.

Après la seconde sortie, le perméat **8** peut, soit être récupéré, soit être acheminé vers la cuve **11**.

Un système de vannes permet de contrôler la circulation des différents fluides dans les différents circuits :
- une première vanne **V₁** est située entre la pompe **10** et l'entrée **5** de la membrane **1**,
- une deuxième vanne **V₂** est située après la deuxième sortie **6** pour le perméat **8** et son ouverture permet de récupérer directement le perméat **8**,
- une troisième vanne **V₃** est située après la sortie **6** pour le perméat **8** sur le circuit acheminant le perméat **8** vers la cuve **11**, et
- une quatrième vanne **V₄** est située après la sortie **7** pour le rétentat **9**, sur le circuit acheminant le rétentat **9** vers la cuve **11**.

Durant un cycle de production, correspondant au traitement du vin, la deuxième vanne **V₂**, permettant de récupérer directement le vin traité, est ouverte, alors que la troisième vanne **V₃**, située sur le circuit acheminant le perméat vers la cuve **11**, est fermée.

Dans les procédés de nettoyage de l'art antérieur, la deuxième vanne **V₂** est fermée, alors que la troisième vanne **V₃**, située sur le circuit acheminant le perméat vers la cuve **11**, est ouverte. L'ouverture de la troisième vanne **V₃** assure donc le passage du fluide de nettoyage au travers de la couche de séparation **4**.

Dans le procédé selon l'invention, la sortie **6** du perméat **8** et, en particulier, la deuxième et la troisième vannes **V₂** et **V₃** sont fermées, empêchant ainsi le fluide de nettoyage de traverser la couche séparatrice **4**. Le fluide de nettoyage, contenant au moins un réactif chimique capable de dégrader chimiquement et au moins partiellement les éléments retenus lors de la filtration du vin et responsables du colmatage, circule donc dans le canal **3** et quitte la membrane par la sortie **7** pour le rétentat **9**. La vanne **V₄** étant ouverte, le fluide de nettoyage, entraînant les éléments colmatants et leurs débris, est acheminé vers la cuve **11**.

Selon l'invention, le procédé de nettoyage mettra de préférence en oeuvre au moins un réactif chimique choisi parmi : l'hydroxyde de sodium, l'hydroxyde de potassium, l'acide nitrique, l'acide phosphorique et l'acide chlorhydrique.

Ces réactifs chimiques peuvent être utilisés sous forme pure ou bien en association avec au moins un tensioactif, agent complexant ou agent séquestrant. A titre d'agent sequestrant, on pourra par exemple citer l'acide éthylènediamine tétraacétique (EDTA). A titre de tensioactifs, on pourra par exemple citer les tensioactifs de type tween®, tels que le monooléate de polyoxyéthylène (20) sorbitan.

L'invention sera mieux comprise grâce aux essais ci-après qui illustrent l'invention, sans toutefois la limiter, et qui montrent que la modification du cycle de nettoyage selon l'invention permet d'améliorer considérablement la régénération des membranes utilisées dans la filtration du vin.

Ces essais ont été réalisés sur une installation présentant les caractéristiques suivantes :
- Surface installée : 100 m²,
- Vitesse de circulation : 4 m/s,
- Pression transmembranaire : de 0,5 à 4 bars,
- Principe de fonctionnement de l'installation : à débit constant de perméat,
- Type de membrane : membrane céramique de 0,2 µm.

Entre chaque cycle de production, un, deux ou trois cycles de nettoyage chimique mettant en oeuvre :
- un nettoyage basique à base d'hydroxyde de sodium à pH = 12,5, à une température de 80 °C, et pendant une durée de 20 minutes et,
- un nettoyage acide à base d'acide nitrique à pH = 2, à une température de 60 °C, et pendant une durée de 20 minutes,
sont effectués, tout d'abord selon les techniques de l'art antérieur, en forçant les réactifs chimiques à traverser la membrane et, en particulier, ses couches inorganiques de séparation. La troisième vanne **V₃** est donc ouverte.

Le tableau 1 ci-après présente les variations de perméabilité à l'eau observées, ainsi que les débits de production obtenus après lavage.

**TABLEAU 1**

| Ordre du cycle de production | Perméabilité initiale à l'eau (l/h/m²/b) | Temps de production (h) | Capacité de production (hl entre deux nettoyages chimiques | Nombre de cycles de lavages | Perméabilité à l'eau après lavage (l/h/m²/b) |
|---|---|---|---|---|---|
| 1 | 1100 | 21 | 1100 | 1 | 650 |
| | | | | 2 | 830 |
| | | | | 3 | 1050 |
| 2 | 1050 | 20 | 950 | 1 | 440 |
| | | | | 2 | 630 |
| | | | | 3 | 920 |
| 3 | 920 | 18 | 800 | 1 | 420 |
| | | | | 2 | 640 |
| | | | | 3 | 830 |
| 4 | 830 | 12 | 500 | 1 | 350 |
| | | | | 2 | 420 |
| | | | | 3 | 530 |
| 5 | 530 | 10 | 440 | 1 | 250 |
| | | | | 2 | 350 |
| | | | | 3 | 480 |
| | | | | 7 | 940 |
| 6 | 940 | 19 | 850 | 1 | 420 |
| | | | | 2 | 650 |
| | | | | 3 | 810 |

Ces résultats montrent que les membranes inorganiques se colmatent constamment et qu'il est donc nécessaire de réaliser des cycles de nettoyage de plus en plus nombreux.

En utilisant le procédé de nettoyage selon l'invention, c'est-à-dire, par exemple en fermant les vannes **V₂** et **V₃** de sortie du perméat durant la présence des réactifs minéraux, tous les autres paramètres du procédé de nettoyage restant inchangés, les résultats présentés au tableau 2 sont alors obtenus.

**TABLEAU 2**

| Ordre du cycle de production | Perméabilité initiale à l'eau (l/h/m²/b) | Temps de production (h) | Capacité de production (hl entre deux nettoyages chimiques | Nombre de cycles de lavages | Perméabilité à l'eau après lavage (l/h/m²/b) |
|---|---|---|---|---|---|
| 1 | 1100 | 21 | 1100 | 1 | 1040 |
| 2 | 1040 | 21 | 1100 | 1 | 1020 |
| 3 | 1020 | 21 | 1100 | 1 | 1030 |
| 4 | 1030 | 21 | 1100 | 1 | 1010 |
| 5 | 1010 | 21 | 1100 | 1 | 1040 |

Il apparaît donc qu'en utilisant le procédé selon l'invention, les valeurs de perméabilité à l'eau deviennent constantes et indépendantes de l'ordre du cycle de production. La quantité produite, ainsi que le temps de production, sont invariables en fonction de l'ordre du cycle. Le procédé selon l'invention modifiant la cinétique du nettoyage chimique améliore donc considérablement la régénération des membranes.

## Revendications

1. Procédé de nettoyage d'une membrane inorganique (1), colmatée par des éléments retenus lors d'une utilisation antérieure de la membrane pour la filtration tangentielle d'un vin, ladite membrane comportant un support poreux inorganique (2) qui délimite au moins un canal (3) de circulation pour le vin à traiter dont la surface est recouverte par au moins une couche inorganique (4) de séparation pour le vin à traiter, de manière qu'après avoir traversé la couche inorganique (4) de séparation, le vin traité puisse être récupéré sur une sortie (6), ledit procédé mettant en oeuvre une étape de régénération chimique, réalisée en faisant circuler un milieu fluide contenant au moins un réactif chimique capable de dégrader chimiquement et au moins partiellement les éléments responsables du colmatage,
**caractérisé en ce que** la circulation du milieu fluide, contenant au moins un réactif chimique, est assurée dans le canal de circulation (3), sans que ledit fluide ne traverse la couche inorganique (4) de séparation.

2. Procédé de nettoyage selon la revendication 1, **caractérisé en ce qu'**il consiste à fermer la sortie (6) du vin traité lors de l'exécution de l'étape de régénération chimique.

3. Procédé de nettoyage selon l'une des revendications 1 et 2, **caractérisé en ce qu'**au moins un réactif chimique, choisi parmi : l'hydroxyde de sodium, l'hydroxyde de potassium, l'acide nitrique, l'acide phosphorique et l'acide chlorhydrique, est utilisé.

4. Procédé de nettoyage selon la revendication 3, **caractérisé en ce que** l'hydroxyde de sodium, l'hydroxyde de potassium, l'acide nitrique, l'acide phosphorique ou l'acide chlorhydrique utilisé est sous forme pure.

5. Procédé de nettoyage selon la revendication 4, **caractérisé en ce que** l'hydroxyde de sodium, l'hydroxyde de potassium, l'acide nitrique, l'acide phosphorique et l'acide chlorhydrique utilisé est associé à au moins un tensioactif, agent complexant ou agent séquestrant.

## Claims

1. A process for cleaning an inorganic membrane (1), clogged by elements retained during previous use of the membrane for tangential filtration of wine, said membrane comprising a porous inorganic support (2) which delimits at least one circulation channel (3) for the wine to be treated, the surface of which is covered by at least one inorganic separation layer (4) for the wine to be treated, such that after having passed through the inorganic separation layer (4) the treated wine can be recovered at an outlet (6), said process utilising a chemical regeneration step performed by having circulate a fluid medium containing at least one chemical reagent capable of chemically and at least partially degrading the elements responsible for clogging,
**characterised in that** circulation of the fluid medium, containing at least one chemical reagent, is ensured in the circulation channel (3), without said fluid passing through the inorganic separation layer (4).

2. The cleaning process as claimed in Claim 1, **characterised in that** it consists of closing the outlet (6) of the treated wine during execution of the chemical regeneration step.

3. The cleaning process as claimed in either of Claims 1 and 2, **characterised in that** at least one chemical reagent is used, selected from sodium hydroxide, potassium hydroxide, nitric acid, phosphoric acid and hydrochloric acid.

4. The cleaning process as claimed in Claim 3, **characterised in that** the sodium hydroxide, potassium hydroxide, nitric acid, phosphoric acid or hydrochloric acid used is in pure form.

5. The cleaning process as claimed in Claim 4, **characterised in that** the sodium hydroxide, potassium hydroxide, nitric acid, phosphoric acid and hydrochloric acid used are associated with at least one surfactant, complexing agent or sequestering agent.

## Patentansprüche

1. Verfahren zur Reinigung einer anorganischen Membran (1), die durch Elemente, welche während einer vorherigen Benutzung der Membran zur Querstromfiltration eines Weines zurückgehalten worden sind, verschlammt wird,
wobei die Membran einen anorganischen porösen Träger (2) umfaßt, welcher mindestens einen Zirkulationskanal (3) für den zu behandelnden Wein abgrenzt, dessen Oberfläche mit mindestens einer anorganischen Trennschicht (4) für den zu behandelnden Wein beschichtet ist, so daß nach Durchquerung der anorganischen Trennschicht (4) der behandelte Wein über einen Auslaß (6) gesammelt werden kann,
wobei das Verfahren einen chemischen Regenerationsschritt bewirkt, der durch Zirkulation eines fluiden Mediums, das mindestens ein chemisches Reaktionsmittel enthält und in der Lage ist, die für die Verschlammung verantwortlichen Elemente chemisch und mindestens partiell zu zersetzen,
**dadurch gekennzeichnet, daß** die Zirkulation des flüssigen Mediums, welches mindestens ein chemisches Reaktionsmittel enthält, im Zirkulationskanal (3) gewährleistet ist, ohne daß das Fluid die anorganische Trennschicht überquert.

2. Verfahren zur Reinigung nach Anspruch 1,
**dadurch gekennzeichnet, daß** das Verfahren auf dem Schließen des Auslasses (6) des behandelten Weines während der Durchführung des chemischen Regenerationsschrittes beruht.

3. Verfahren zur Reinigung nach einem der Ansprüche 1 und 2,
**dadurch gekennzeichnet, daß** mindestens ein chemisches Reaktionsmittel benutzt wird, welches aus Natriumhydroxid, Kaliumhydroxid, Salpetersäure, Phosphorsäure und Salzsäure ausgewählt wird.

4. Verfahren zur Reinigung nach Anspruch 3,
**dadurch gekennzeichnet, daß** das Natriumhydroxid, das Kaliumhydroxid, die Salpetersäure, die Phosphorsäure oder die Salzsäure in reiner Form benutzt werden.

5. Verfahren zur Reinigung nach Anspruch 4,
**dadurch gekennzeichnet, daß** das benutzte Natriumhydroxid, das benutzte Kaliumhydroxid, die benutzte Salpetersäure, die benutzte Phosphorsäure und die benutzte Salzsäure mit mindestens einem Tensid, einem komplexbildenden Agens oder einem Maskierungsmittel vermischt wird.
